# EUROPÄISCHE PATENTANMELDUNG

(11) **EP 4 755 556 A1**
(43) Veröffentlichungstag der Anmeldung: **10.06.2026**
(21) Anmeldenummer: 25219227.3
(22) Anmeldetag: 27.11.2025
(51) Int. Cl.: B23B 31/30, B23B 29/04, B23B 31/06

(54) **SPANNEINSATZ UND SPANNANORDNUNG**

(30) Priorität: 04.12.2024 DE 102024136188
(71) Anmelder: MAPAL Dr. Kress SE & Co. KG, 73431 Aalen (DE)
(72) Erfinder: SIEWERT, Karsten, 09405 Zschopau (DE); GERSTENBERGER, Ralf, 09465 Sehmatal (DE)
(74) Vertreter: Gleiss Große Schrell und Partner mbB

(57) **Zusammenfassung**

Die Erfindung betrifft einen Spanneinsatz (5) zum Einspannen in eine Halteaufnahme (3) einer Werkzeughaltevorrichtung (7), wobei der Spanneinsatz (5) eingerichtet ist, um entlang einer Längsachse (L) in die Halteaufnahme (3) eingesetzt zu werden, wobei der Spanneinsatz (5) außerdem ein Sicherungselement (11) aufweist, das schräg zu der Längsachse (L) zwischen einer Sicherungsposition und einer Freigabeposition verlagerbar ist, wobei das Sicherungselement (11) eingerichtet ist, um einen radialen Vorsprung (13) der Halteaufnahme (3) zu hintergreifen, wenn der Spanneinsatz (5) in die Halteaufnahme (3) eingespannt und das Sicherungselement (11) in der Sicherungsposition angeordnet ist.

## Beschreibung

Die Erfindung betrifft einen Spanneinsatz und eine Spannanordnung, die eine Halteaufnahme in Kombination mit einem solchen Spanneinsatz aufweist.

Spanneinsätze der hier angesprochenen Art sind dafür vorgesehen, in eine Halteaufnahme einer Werkzeughaltevorrichtung, beispielsweise einer Werkzeugmaschine oder eines Werkzeugmagazins, eingespannt zu werden. Versagt eine Spannvorrichtung, die vorgesehen ist, um den Spanneinsatz in der Halteaufnahme zu halten, kann ein solcher Spanneinsatz allerdings unkontrolliert herausfallen, wodurch beispielsweise der Spanneinsatz selbst, ein darin gespanntes Werkzeug, ein zu bearbeitendes Werkstück, und/oder die Werkzeughaltevorrichtung beschädigt werden kann/können.

Der Erfindung liegt daher die Aufgabe zugrunde, einen Spanneinsatz und eine eine Halteaufnahme in Kombination mit einem solchen Spanneinsatz aufweisende Spannanordnung zu schaffen, wobei die genannten Nachteile zumindest reduziert sind, vorzugsweise vermieden werden.

Die Aufgabe wird gelöst, indem die vorliegende technische Lehre bereitgestellt wird, insbesondere die Lehre der unabhängigen Ansprüche sowie der in den abhängigen Ansprüchen und der Beschreibung offenbarten Ausführungsformen.

Die Aufgabe wird insbesondere in einem ersten Aspekt gelöst, indem ein Spanneinsatz zum Einspannen in eine Halteaufnahme einer Werkzeughaltevorrichtung geschaffen wird, wobei der Spanneinsatz eine Längsachse aufweist, entlang derer er in die Halteaufnahme eingesetzt werden kann, wobei der Spanneinsatz außerdem ein Sicherungselement aufweist, das schräg zu der Längsachse zwischen einer Sicherungsposition und einer Freigabeposition verlagerbar ist, wobei das Sicherungselement eingerichtet ist, um einen radialen Vorsprung der Halteaufnahme zu hintergreifen, wenn der Spanneinsatz in die Halteaufnahme eingespannt und das Sicherungselement in der Sicherungsposition angeordnet ist. Wenn eine Spannvorrichtung, die vorgesehen ist, um den Spanneinsatz in der Halteaufnahme zu halten, versagt, verhindert das Sicherungselement vorteilhaft, dass der Spanneinsatz aus der Halteaufnahme herausfällt, indem das Sicherungselement den radialen Vorsprung hintergreift und damit den Spanneinsatz in der Halteaufnahme festhält. Vorteilhaft kann so eine Beschädigung des Spanneinsatzes selbst, eines Werkzeugs, Werkstücks oder der Werkzeughaltevorrichtung vermieden werden. Insbesondere wird so eine formschlüssige Sicherung für den Spanneinsatz in der Halteaufnahme bereitgestellt. Die hier vorgeschlagene Sicherung bringt darüber hinaus vorteilhaft keine Querkräfte ein, die ansonsten zu Rundlaufabweichungen führen könnten.

Darunter, dass das Sicherungselement schräg zu der Längsachse verlagerbar ist, wird im Kontext der vorliegenden technischen Lehre insbesondere verstanden, dass das Sicherungselement entlang einer Verlagerungsbahn verlagerbar ist, die mit der Längsachse einen Winkel einschließt, der von 0° und von 180° - bei einem 360° umfassenden Vollkreis - verschieden ist. Insbesondere kann die Verlagerungsbahn senkrecht auf der Längsachse stehen; alternativ kann die Verlagerungsbahn windschief zu der Längsachse ausgerichtet sein.

In einer Ausführungsform ist das Sicherungselement somit senkrecht, das heißt radial, zu der Längsachse zwischen der Sicherungsposition und der Freigabeposition verlagerbar.

In einer Ausführungsform ist das Sicherungselement diskret zwischen der Sicherungsposition und der Freigabeposition, das heißt in mindestens zwei wohldefinierte Funktionsstellungen, nämlich die Sicherungsposition und die Freigabeposition, verlagerbar. In einer anderen Ausführungsform ist das Dichtungselement kontinuierlich - über ein Kontinuum von Funktionsstellungen - zwischen der Sicherungsposition der Freigabeposition verlagerbar.

Gemäß einer Weiterbildung der Erfindung ist vorgesehen, dass das Sicherungselement eingerichtet ist, um den radialen Vorsprung der Halteaufnahme in der Freigabeposition nicht zu hintergreifen. Auf diese Weise kann der Spanneinsatz ungehindert in die Halteaufnahme eingeführt und aus der Halteaufnahme entnommen werden, wenn das Sicherungselement in der Freigabeposition angeordnet ist. Insbesondere ist das Sicherungselement eingerichtet, um den radialen Vorsprung in der Freigabeposition freizugeben.

Gemäß einer Weiterbildung der Erfindung ist vorgesehen, dass das Sicherungselement als Sicherungshaken ausgebildet ist. Dies stellt eine ebenso einfache wie funktionssichere Ausgestaltung des Sicherungselements dar. Insbesondere weist das Sicherungselement eine ausgehend von einem Grundkörper des Sicherungselements radial in Richtung der Längsachse vorspringende Haltenase auf, die den radialen Vorsprung der Halteaufnahme in der Sicherungsposition hintergreift.

Gemäß einer Weiterbildung der Erfindung ist vorgesehen, dass das Sicherungselement an einen Ringbund des Spanneinsatzes mittels einer Spannschraube angeschraubt und mittels der Spannschraube in der Sicherungsposition festlegbar ist, wobei die Spannschraube gelöst werden kann, um das Sicherungselement in die Freigabeposition zu verlagern. Dies stellt eine ebenso einfache wie leicht zu betätigende und zugleich funktionssichere Ausgestaltung dar. Es ist bevorzugt vorgesehen, dass das Sicherungselement mit einer Feststellbewegung der Spannschraube in die Sicherungsposition verlagert, dabei also insbesondere durch die Spannschraube mitgenommen wird, wobei es durch die Spannschraube in der Sicherungsposition fixiert oder festgespannt wird. Es ist möglich, dass das Sicherungselement auch zugleich mit einer Lösebewegung der Spannschraube in die Freigabeposition verlagert, also gleichsam durch die Spannschraube auch in Löserichtung mitgenommen wird. Alternativ ist bevorzugt vorgesehen, dass das Sicherungselement beim Lösen der Spannschraube lediglich passiv freigegeben wird, jedoch nicht zugleich aus der Sicherungsposition heraus verlagert wird; vielmehr ist es dann möglich, das Sicherungselement anderweitig, beispielsweise manuell, aus der Sicherungsposition heraus in die Freigabeposition zu verlagern.

Gemäß einer Weiterbildung der Erfindung ist vorgesehen, dass der Spanneinsatz eine im Folgenden als Spannfutter bezeichnete Werkzeugaufnahme zum Einspannen eines Werkzeugs in den Spanneinsatz aufweist. Somit ist vorteilhaft der Spanneinsatz selbst als ein Spannfutter ausgebildet; ein solcher Spanneinsatz wird auch als Doppelspanneinsatz bezeichnet.

Gemäß einer Weiterbildung der Erfindung ist vorgesehen, dass das Spannfutter als Hydrodehnspannfutter ausgebildet ist. Dies stellt eine besonders einfach zu bedienende und zugleich wirksame Ausgestaltung des Spannfutters dar.

Gemäß einer Weiterbildung der Erfindung ist vorgesehen, dass der Spanneinsatz die Spannvorrichtung aufweist, die vorgesehen ist, um den Spanneinsatz in der Halteaufnahme zu halten. Vorteilhaft bringt somit der Spanneinsatz selbst die Funktionalität zum Einspannen in die Halteaufnahme mit, wobei die Halteaufnahme entsprechend einfach, insbesondere als einfache Bohrung, ausgebildet sein kann. Insbesondere ist die Spannvorrichtung eingerichtet, um den Spanneinsatz in der Halteaufnahme zu halten. Insbesondere ist die Spannvorrichtung angeordnet und eingerichtet, um den Spanneinsatz in der Halteaufnahme zu halten.

In einer Ausführungsform ist die Spannvorrichtung als Hydrodehnspann-Vorrichtung ausgebildet. Durch Anziehen einer Druckschraube und Erhöhen eines Hydraulikdrucks in einer Druckkammer der Hydrodehnspann-Vorrichtung wird bevorzugt ein Außendurchmesser des Spanneinsatzes bereichsweise vergrößert, sodass sich der Spanneinsatz in der Halteaufnahme festklemmen kann.

In einer anderen Ausführungsform ist es möglich, dass die Halteaufnahme die Spannvorrichtung aufweist, die vorgesehen ist, um den Spanneinsatz in der Halteaufnahme zu halten.

Gemäß einer Weiterbildung der Erfindung ist vorgesehen, dass die Spannschraube die Druckschraube der Hydrodehnspann-Vorrichtung ist. Vorteilhaft kann so diese Druckschraube eine zweifache Funktion übernehmen, nämlich zum einen die Aktivierung der Hydrodehnspann-Vorrichtung beim Spannen des Spanneinsatzes, zum anderen zugleich die Verlagerung des Sicherungselements in die Sicherungsposition sowie dessen Fixierung darin.

Vorzugsweise weist der Spanneinsatz einen Sicherungsring auf, mit dem die Druckschraube gesichert ist, insbesondere gegen Herausfallen.

In einer Ausgestaltung wird bevorzugt zuerst der Spanneinsatz in die Halteaufnahme eingesetzt und in dieser durch Aktivieren der Spannvorrichtung fixiert, wobei bevorzugt zugleich das Sicherungselement in die Sicherungsposition verlagert und dort fixiert wird; danach wird ein Werkzeug in das Spannfutter des Spanneinsatzes eingesetzt, und das Spannfutter wird bevorzugt mittels einer weiteren Druckschraube aktiviert, wobei das Werkzeug eingespannt wird. Alternativ wird zuerst das Werkzeug in das Spannfutter des Spanneinsatzes eingesetzt, und das Spannfutter wird bevorzugt mittels der weiteren Druckschraube aktiviert, wobei das Werkzeug eingespannt wird; danach wird der Spanneinsatz mit dem darin eingespannten Werkzeug in die Halteaufnahme eingesetzt und in dieser durch Aktivieren der Spannvorrichtung fixiert, wobei bevorzugt zugleich das Sicherungselement in die Sicherungsposition verlagert und dort fixiert wird.

Gemäß einer Weiterbildung der Erfindung ist vorgesehen, dass der Ringbund einen Anschlag für das Sicherungselement aufweist. Vorteilhaft kann die Sicherungsposition durch den Anschlag definiert sein, indem das Sicherungselement in der Sicherungsposition an dem Anschlag anschlägt. In einer Ausgestaltung ist der Anschlag als eine an einer Umfangsfläche des Ringbunds ausgebildete Abflachung ausgebildet; das Sicherungselement liegt dann der Sicherungsposition - insbesondere mit einer Anlagefläche plan - an der Abflachung an. In der Freigabeposition ist das Sicherungselement vorzugsweise von der Abflachung beabstandet.

Alternativ oder zusätzlich zu dem Anschlag weist der Ringbund bevorzugt eine Führung für das Sicherungselement auf. Vorteilhaft wird auf diese Weise das Sicherungselement während seiner Verlagerung zwischen der Sicherungsposition und der Freigabeposition geführt, sodass die Verlagerung besonders definiert erfolgt und der Spanneinsatz sehr stabil ist. In einer Ausgestaltung ist die Führung als eine Schwalbenschwanz-Führung oder als eine Führung mit zwei Stiften ausgebildet; dies stellt beides jeweils eine besonders effektive und sichere Führung dar. In einer anderen Ausgestaltung ist es möglich, dass die Führung durch eine Seitenwandung des Ringbunds gebildet ist, wobei das Sicherungselement während seiner Verlagerung insbesondere an der Seitenwandung entlang gleitet. Dies stellt vorteilhaft eine besonders einfache Ausgestaltung der Führung dar.

In einer Ausführungsform weist der Ringbund eine Aussparung - insbesondere in Form einer ausgeschnittenen Ecke - auf, wobei die Abflachung gleichsam einen Boden der Aussparung bildet. Der Boden der Aussparung ist damit der Anschlag. Ein Normalenvektor der Abflachung weist dabei bevorzugt in radiale Richtung oder parallel zur Radialrichtung, steht also senkrecht oder windschief auf der Längsachse. Bevorzugt weist die Aussparung zumindest einseitig eine Seitenwandung - als die Führung - auf, an der das Sicherungselement mit einer Seitenfläche anliegt. Auf diese Weise ist das Sicherungselement besonders stabil an dem Ringbund sowohl gehalten als auch geführt.

Die Aufgabe wird in einem zweiten Aspekt auch gelöst, indem eine Spannanordnung geschaffen wird, die eine Halteaufnahme einer Werkzeughaltevorrichtung und einen erfindungsgemäßen Spanneinsatz oder einen Spanneinsatz nach einer oder mehreren der zuvor beschriebenen Ausführungsformen aufweist, wobei insbesondere die Halteaufnahme und der Spanneinsatz derart ausgebildet und aufeinander abgestimmt sind, dass der Spanneinsatz in die Halteaufnahme eingespannt werden kann. In Zusammenhang mit der Spannanordnung ergeben sich insbesondere die Vorteile, die zuvor bereits in Zusammenhang mit dem Spanneinsatz erläutert wurden.

In einer Ausführungsform ist die Werkzeughaltevorrichtung als Werkzeugmaschine ausgebildet. Alternativ kann die Werkzeughaltevorrichtung als Werkzeugmagazin, insbesondere als Vorhaltemagazin, ausgebildet sein.

In einer Ausführungsform weist die Werkzeugvorrichtung eine Mehrzahl an Halteaufnahmen auf; bevorzugt weist sie einen oder mehrere Revolver mit - jeweils - einer Mehrzahl an Halteaufnahmen auf.

Gemäß einer Weiterbildung der Erfindung ist vorgesehen, dass die Halteaufnahme als eine passive Aufnahme, insbesondere als - optional zylindrische, insbesondere kreiszylindrische - Bohrung, ausgebildet ist. Dies stellt eine besonders vorteilhafte Ausgestaltung der Halteaufnahme dar, wobei der Spanneinsatz mit der ihm zugeordneten Spannvorrichtung einfach in die passive Aufnahme eingespannt werden kann.

Alternativ ist es auch möglich, dass die Halteaufnahme als eine aktive Aufnahme ausgebildet ist. Insbesondere ist in diesem Fall die Spannvorrichtung der Halteaufnahme zugeordnet, das heißt die Halteaufnahme weist die Spannvorrichtung auf. In diesem Fall kann die Spannvorrichtung insbesondere als ein Hydrodehnspannfutter ausgebildet sein.

Die Erfindung wird im Folgenden anhand der Zeichnung näher erläutert. Dabei zeigen:
- Figur 1: eine erste Darstellung eines Ausführungsbeispiels einer Spannanordnung mit einer Halteaufnahme und einem Ausführungsbeispiel eines Spanneinsatzes;
- Figur 2: eine zweite Darstellung der Spannanordnung mit einem Sicherungselement in einer Sicherungsposition, und
- Figur 3: eine dritte Darstellung der Spannanordnung mit dem Sicherungselement in einer Freigabeposition.

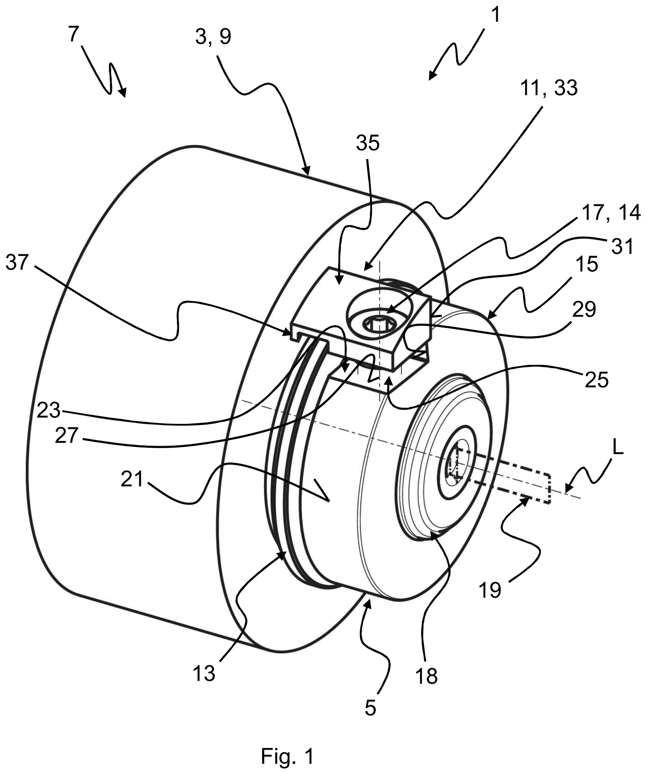

**Fig. 1** zeigt eine erste Darstellung eines Ausführungsbeispiels einer Spannanordnung 1 mit einer Halteaufnahme 3 und einem Ausführungsbeispiel eines Spanneinsatzes 5.

Das Halteaufnahme 3 ist Teil einer Werkzeughaltevorrichtung 7, insbesondere einer Werkzeugmaschine oder eines Werkzeugmagazins, beispielsweise eines Vorhaltemagazins. Der Spanneinsatz 5 und die Halteaufnahme 3 sind derart ausgebildet und aufeinander abgestimmt, dass der Spanneinsatz 5 in die Halteaufnahme 3 eingespannt werden kann.

Bevorzugt ist die Halteaufnahme 3 als passive Aufnahme 9, insbesondere als eine passive Aufnahme 9 einer Mehrzahl an passiven Aufnahmen 9, bevorzugt eines nicht dargestellten Revolvers der Werkzeughaltevorrichtung 7 ausgebildet. Die Werkzeughaltevorrichtung 7 kann auch mehr als einen Revolver aufweisen.

Der Spanneinsatz 5 weist eine Längsachse L auf, entlang derer er in die Halteaufnahme 3 eingesetzt werden kann. Außerdem weist der Spanneinsatz 5 ein Sicherungselement 11 auf, das schräg, insbesondere senkrecht, das heißt radial, oder windschief zu der Längsachse L zwischen einer Sicherungsposition und einer Freigabeposition verlagerbar ist. Das Sicherungselement 11 ist eingerichtet, um einen radialen Vorsprung 13 der Halteaufnahme 3 zu hintergreifen, wenn der Spanneinsatz 5 in die Halteaufnahme 3 eingespannt und das Sicherungselement 11 in der Sicherungsposition angeordnet ist. Wenn eine Spannvorrichtung 14 versagt, die angeordnet und eingerichtet ist, um den Spanneinsatz 5 in der Halteaufnahme 3 zu halten, verhindert das Sicherungselement 11 auf diese Weise, dass der Spanneinsatz 5 aus der Halteaufnahme 3 herausfallen kann.

Bei dem dargestellten Ausführungsbeispiel weist der Spanneinsatz 5 die Spannvorrichtung 14 auf, und die Spannvorrichtung 14 ist als Hydrodehnspann-Vorrichtung ausgebildet mit einem Hydraulikkreis, der mittels einer Druckschraube unter Druck gesetzt werden kann, wobei sich ein Außendurchmesser des Spanneinsatzes 5 bereichsweise aufweitet, sodass der Spanneinsatz 5 in der Halteaufnahme 3 eingespannt, insbesondere verklemmt wird.

Vorzugsweise ist das Sicherungselement 11 an einen Ringbund 15 des Spanneinsatzes 5 mittels einer Spannschraube 17 angeschraubt und mittels der Spannschraube 17 in der Sicherungsposition festlegbar. Die Spannschraube 17 kann gelöst werden, um das Sicherungselement 11 in die Freigabeposition zu verlagern. Die Spannschraube 17 ist dabei die Druckschraube der als Hydrodehnspann-Vorrichtung ausgebildeten Spannvorrichtung 14, wobei die Druckschraube auf diese Weise eine zweifache Funktion übernimmt.

Bei dem hier dargestellten Ausführungsbeispiel weist der Spanneinsatz 5 ein Spannfutter 18 zum Einspannen eines Werkzeugs 19 in den Spanneinsatz 5 auf, das heißt er ist als Doppelspanneinsatz ausgebildet. Weiterhin ist das Spannfutter 18 als ein Hydrodehnspannfutter ausgebildet.

Vorzugsweise weist der Ringbund 15 an einer Umfangsfläche 21 eine Abflachung 23 als einen Anschlag auf, und das Sicherungselement 11 liegt in der Sicherungsposition an der Abflachung 23 an. Dabei kann der Ringbund 15 eine Aussparung 25 - hier in Form einer ausgeschnittenen oder ausgesparten Ecke - aufweisen, wobei ein Boden der Aussparung 25 eine Anlagefläche 27 bildet, deren Normalenvektor bevorzugt in radiale Richtung weist. Die Aussparung 25 kann zumindest einseitig eine Seitenwandung 29 aufweisen, an der das Sicherungselement 11 mit einer Seitenfläche 31 anliegt, und die als eine Führung für das Sicherungselement 11 ausgebildet ist. Auf diese Weise ist das Sicherungselement 11 an dem Ringbund 15 gehalten und geführt. In einer anderen Ausgestaltung kann die Führung als eine Schwalbenschwanz-Führung oder als eine Führung mit zwei Stiften ausgebildet sein.

Bei dem hier dargestellten Ausführungsbeispiel ist das Sicherungselement 11 außerdem als Sicherungshaken 33 ausgebildet. Insbesondere weist das Sicherungselement 11 eine ausgehend von einem Grundkörper 35 des Sicherungselements 11 radial in Richtung der Längsachse L vorspringende Haltenase 37 auf, die den radialen Vorsprung 13 des Spannfutters 3 in der Sicherungsposition hintergreift.

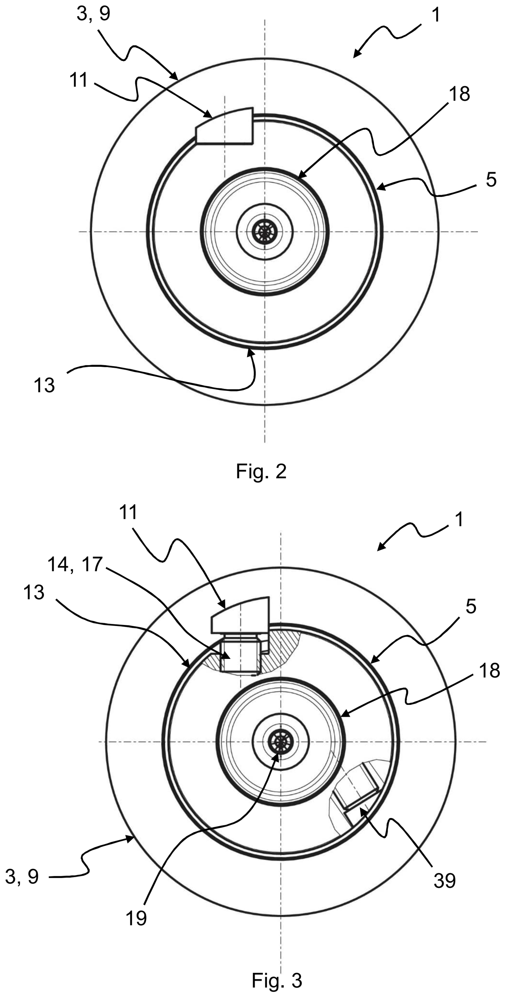

**Fig. 2** zeigt eine zweite Darstellung der Spannanordnung 1.

Gleiche und funktionsgleiche Elemente sind in allen Figuren mit gleichen Bezugszeichen versehen, sodass insofern jeweils auf die vorangegangene Beschreibung verwiesen wird.

Das Sicherungselement 11 ist hier in der Sicherungsposition angeordnet.

**Fig. 3** zeigt eine dritte, teilweise geschnittene Darstellung der Spannanordnung 1 mit dem Sicherungselement 11 in der Freigabeposition.

Das Sicherungselement 11 ist eingerichtet, um den radialen Vorsprung 13 in der Freigabeposition nicht zu hintergreifen, insbesondere um ihn freizugeben. Auf diese Weise kann der Spanneinsatz 5 ungehindert in die Halteaufnahme 3 eingeführt und aus der Halteaufnahme 3 entnommen werden, wenn das Sicherungselement 11 in der Freigabeposition angeordnet ist.

In Figur 3 ist eine weitere Druckschraube 39 des als Hydrodehnspannfutter ausgebildeten Spannfutters 18 erkennbar, mit dem das Werkzeug 19 eingespannt in den Spanneinsatz 5 werden kann.

## Patentansprüche

1. Spanneinsatz (5) zum Einspannen in eine Halteaufnahme (3) einer Werkzeughaltevorrichtung (7), wobei der Spanneinsatz (5) eingerichtet ist, um entlang einer Längsachse (L) in die Halteaufnahme (3) eingesetzt zu werden, wobei der Spanneinsatz (5) außerdem ein Sicherungselement (11) aufweist, das schräg zu der Längsachse (L) zwischen einer Sicherungsposition und einer Freigabeposition verlagerbar ist, wobei das Sicherungselement (11) eingerichtet ist, um einen radialen Vorsprung (13) der Halteaufnahme (3) zu hintergreifen, wenn der Spanneinsatz (5) in die Halteaufnahme (3) eingespannt und das Sicherungselement (11) in der Sicherungsposition angeordnet ist.

2. Spanneinsatz (5) nach Anspruch 1, wobei das Sicherungselement (11) eingerichtet ist, um den radialen Vorsprung (13) der Halteaufnahme (3) in der Freigabeposition nicht zu hintergreifen.

3. Spanneinsatz (5) nach einem der vorhergehenden Ansprüche, wobei das Sicherungselement (11) als Sicherungshaken (33) ausgebildet ist.

4. Spanneinsatz (5) nach einem der vorhergehenden Ansprüche, wobei das Sicherungselement (11) an einen Ringbund (15) des Spanneinsatzes (5) mittels einer Spannschraube (17) angeschraubt und mittels der Spannschraube (17) in der Sicherungsposition festlegbar ist, wobei die Spannschraube (17) gelöst werden kann, um das Sicherungselement (11) in die Freigabeposition zu verlagern.

5. Spanneinsatz (5) nach einem der vorhergehenden Ansprüche, wobei der Spanneinsatz (5) ein Spannfutter (18) zum Einspannen eines Werkzeugs (19) in den Spanneinsatz (5) aufweist.

6. Spanneinsatz (5) nach Anspruch 5, wobei das Spannfutter (18) als Hydrodehnspannfutter ausgebildet ist.

7. Spanneinsatz (5) nach einem der vorhergehenden Ansprüche, wobei der Spanneinsatz (5) eine Spannvorrichtung (14) aufweist, die vorgesehen ist, um den Spanneinsatz (5) in der Halteaufnahme (3) zu halten, wobei die Spannvorrichtung (14) vorzugsweise als Hydrodehnspannfutter ausgebildet ist.

8. Spanneinsatz (5) nach Anspruch 7, wobei die Spannschraube (17) die Druckschraube des Hydrodehnspannfutters der Spannvorrichtung (14) ist.

9. Spanneinsatz (5) nach einem der Ansprüche 4 bis 8, wobei der Ringbund (15) einen Anschlag und/oder eine Führung für das Sicherungselement (11) aufweist.

10. Spannanordnung (1), mit einer Halteaufnahme (3) einer Werkzeughaltevorrichtung (7) in Kombination mit einem Spanneinsatz (5) nach einem der Ansprüche 1 bis 9.

11. Spannanordnung (1) nach Anspruch 10, wobei die Halteaufnahme (3) als eine passive Aufnahme, insbesondere als Bohrung, ausgebildet ist.
